# EUROPEAN PATENT APPLICATION

(11) **EP 3 291 554 A1**
(43) Date of publication of application: **07.03.2018**
(21) Application number: 16306096.5
(22) Date of filing: 30.08.2016
(51) Int. Cl.: H04N 19/176, H04N 19/70, H04N 19/117, H04N 19/136, H04N 19/182, H04N 19/82, H04N 19/86

(54) **METHOD AND APPARATUS FOR VIDEO CODING WITH SAMPLE ADAPTIVE OFFSET**

(71) Applicant: Thomson Licensing, 92130 Issy-les-Moulineaux (FR)
(72) Inventor: BORDES, Philippe, 35576 Cesson-Sévigné (FR); RACAPE, Fabien, 35576 Cesson-Sévigné (FR); POIRIER, Tangi, 35576 Cesson-Sévigné (FR); CHEN, Ya, 35576 Cesson-Sévigné (FR)
(74) Representative: Huchet, Anne

(57) **Abstract**

Sample Adaptive Offset (SAO) can be used for artifact reduction in video coding. Designing the categories in SAO based on the video content may improve the SAO efficiency. In one embodiment, the EO categories are determined based on whether a difference of a sample and neighboring samples is greater than a threshold or not. Introducing a threshold based on the bit depth of the video content into EO categorization may counter the impact of random noise that frequently occurs in the video content with a high bit depth. In addition, the threshold may be adjusted based on the directional pattern of a block. In one embodiment, the threshold for "EO_45" or "EO_135" may be greater than the threshold for "EO_0" or "EO_90."

## Description

### TECHNICAL FIELD

The present embodiments generally relate to a method and an apparatus for video encoding and decoding, and more particularly, to a method and an apparatus for video encoding and decoding with Sample Adaptive Offset (SAO).

### BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

In video encoding or decoding, in-loop filtering can be applied after reconstruction of the coding blocks. The filtered reconstructed picture can be stored in the decoded picture buffer for output and for prediction if indicated.

Different in-loop filters can be used. For example, in High Efficiency Video Coding (HEVC), two consecutive in-loop filters are specified. First, a deblocking filter is applied to block edges in order to reduce the amount of visible blockiness artifacts. In addition, SAO filtering is applied. SAO classifies reconstructive samples into different categories, obtains an offset for each category, and then adds the offset to each sample of the category. SAO filtering can further reduce coding artifacts.

### SUMMARY

According to a general aspect of the present principles, a method for processing video data is presented, comprising: accessing a sample in a picture and two neighboring samples of the sample, the two neighboring samples including a first neighboring sample and a second neighboring sample; determining a category for the sample, based on at least one of a relation between the sample and the first neighboring sample, and a second relation between the sample and the second neighboring sample, and wherein the determining is further based on a value; and adjusting values of samples in the category based on an offset.

The categorization may be perform on a region of the picture, wherein the region may be a coding tree block, a slice, or different coding units. The method may be used for in-loop filtering for encoding or decoding. When used for encoding, the offset may be further encoded into a bitstream; and when used for decoding, the offset may be decoded from the bitstream.

According to another general aspect of the present principles, a video signal is formatted to include: a sample in a picture and two neighboring samples of the sample, the two neighboring samples including a first neighboring sample and a second neighboring sample, wherein a category for the sample is determined, based on at least one of a relation between the sample and the first neighboring sample and a second relation between the sample and the second neighboring sample, and wherein the category is further based on a value; and an offset used to adjust values of samples in the category.

The category for the sample may be determined based on (1) a difference of a value of the first neighboring sample and a value of the sample exceeding a first value, and (2) a difference of a value of the second neighboring sample and the sample value exceeding a second value. The category for the sample may also be determined based on (1) a difference of the first neighboring sample value and the sample value exceeding a first value, and (2) an absolute value of the difference of the sample value and the second neighboring sample value being smaller than a second value. The category for the sample may also be determined based on (1) a difference of the first neighboring sample value and the sample value exceeding a first value, and (2) a difference of the sample value and the second neighboring sample value exceeding a second value. In these categorization, the values of samples in the category are configured to be adjusted by a positive offset, without explicit signaling of a sign.

The category for the sample may also be determined based on (1) a difference of the sample value and the first neighboring sample value exceeding a first value, and (2) an absolute value of the difference of the sample value and the second neighboring sample value being smaller than a second value. The category for the sample may also be determined based on (1) a difference of the sample value and the first neighboring sample value exceeding a first value, and (2) a difference of the sample value and the second neighboring sample value exceeding a second value. The category for the sample may also be determined based on (1) a difference of the sample value and the first neighboring sample value exceeding a first value, and (2) a difference of the second neighboring sample value and the sample value being smaller than a second value. In these categorization, the values of samples in the category are configured to be adjusted by a negative offset, without explicit signaling of a sign.

The first value or the second value may be based on a bit depth of the picture. For example, the first value or the second value is based on 1 << (bitdepth - 9), wherein bitdepth is the bit depth of the picture.

The categorization for the sample in a block may be determined given a class for the block of the picture, wherein the two neighboring samples are determined based on the class, and wherein at least one of the first value and the second value is based on the class.

The present embodiments also provide an apparatus for processing video data according to the methods described above.

The present embodiments also provide a computer readable storage medium having stored thereon instructions for processing video data according to the methods described above.

The present embodiments also provide a computer readable storage medium having stored thereon a bitstream generated according to the methods described above.

The present embodiments also provide an apparatus for transmitting the video signal generated according to the methods described above.

### BRIEF DESCRIPTION OF THE DRAWINGS

FIG. 1 illustrates a block diagram of an exemplary HEVC video encoder.
FIG. 2 illustrates a block diagram of an exemplary HEVC video decoder.
FIG. 3 is a pictorial example illustrating four 1-D directional patterns for EO (Edge Offset) sample classification.
FIG. 4 a pictorial example illustrating that positive offsets are used for categories 1 and 2, and negative offsets are used for categories 3 and 4.
FIG. 5A is a pictorial example illustrating BO (Band Offset) with the associated starting band position and offsets of four consecutive bands, and FIG. 5B is a pictorial example illustrating BO with non-consecutive bands.
FIG. 6 illustrates an exemplary method for decoding a bitstream using SAO.
FIG. 7A is a pictorial example illustrating a portion of a picture that includes a coding tree block (CTB), and FIG. 7B illustrates an exemplary method for obtaining the SAO parameters.
FIG. 8 illustrates an exemplary method for decoding the SAO parameters for the luma component of the current CTB.
FIG. 9 illustrates a histogram for an exemplary CTB and the associated 32 bands.
FIG. 10A illustrates an exemplary method for adjusting the BO categories at the decoder, according to an embodiment of the present principles, FIG. 10B illustrates an example of redefining the categories, according to an embodiment of the present principles, and FIG. 10C illustrates an example of dividing a band into two sub-bands, according to an embodiment of the present principles.
FIG. 11 illustrates an example of homogenizing the categories, according to an embodiment of the present principles.
FIG. 12A illustrates an exemplary method for adjusting the EO categories, according to an embodiment of the present principles, and FIG. 12B illustrates an example of adjusting the categories, according to an embodiment of the present principles.
FIG. 13 illustrates an exemplary modified EO classification.
FIG. 14 illustrates a block diagram of an exemplary system in which various aspects of the exemplary embodiments of the present principles may be implemented.

### DETAILED DESCRIPTION

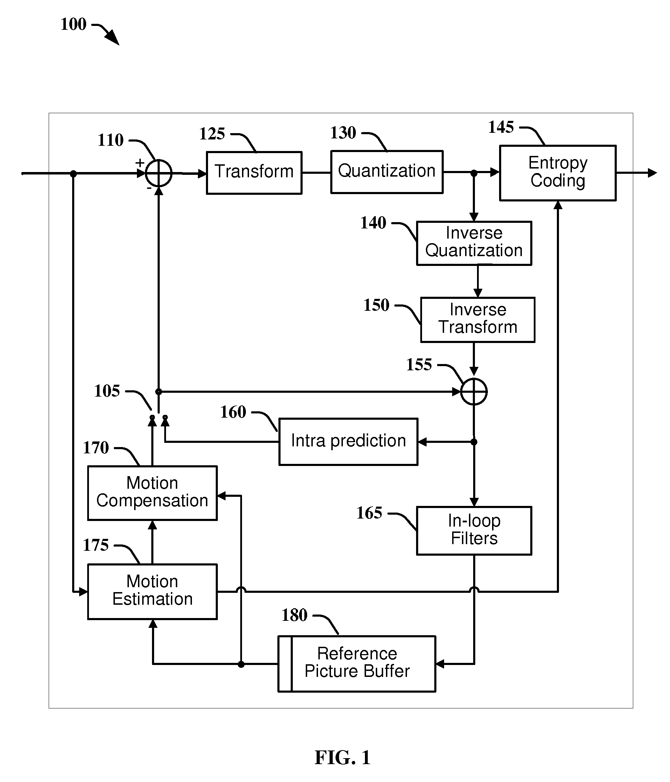

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably. Usually but not necessarily the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated block of all encoded color components (Y, Cb, Cr, or monochrome), syntax elements and prediction data that are associated with the block (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock, a partition and a sub-block as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference extends over two times the block size in horizontal and vertical direction using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed.

The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD.

In HEVC, the precision of the motion information for motion compensation is one quarter-sample (also referred to as quarter-pel or 1/4-pel) for the luma component and one eighth-sample (also referred to as 1/8-pel) for the chroma components. A 7-tap or 8-tap interpolation filter is used for interpolation of fractional-sample positions, i.e., 1/4, 1/2 and 3/4 of full sample locations in both horizontal and vertical directions can be addressed for luma.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO filtering to reduce encoding artifacts. The filtered image is stored at a reference picture buffer (180).

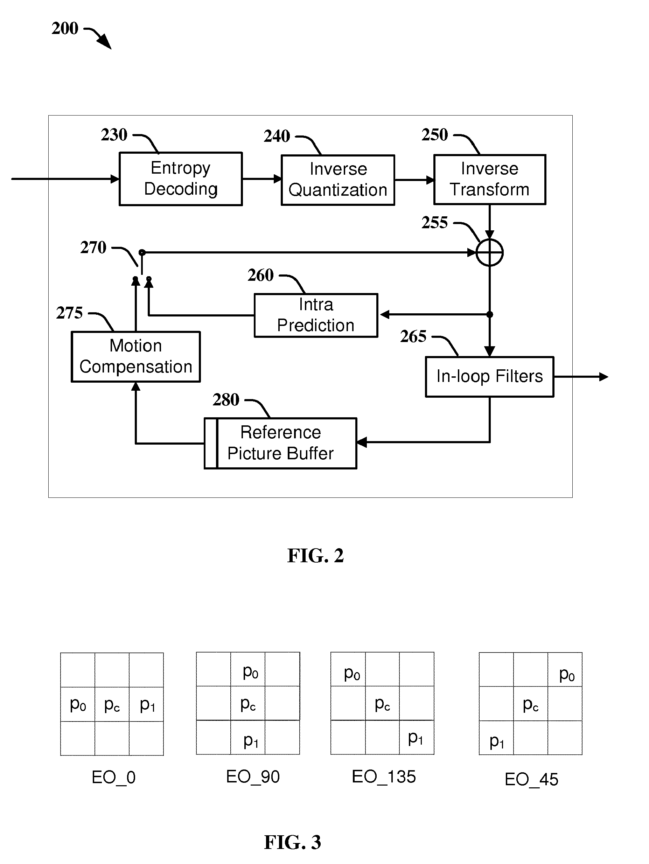

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (230) to obtain transform coefficients, motion vectors, and other coded information. The transform coefficients are de-quantized (240) and inverse transformed (250) to decode the prediction residuals. Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

In HEVC, SAO is a sample-based filtering operation on a CTU basis. SAO is applied right after the deblocking filter if activated. SAO can be deactivated per CTU. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the luma and chroma components, where the SAO mode is the same for Cb and Cr components. The SAO parameters are configured individually for each color component.

### Edge Offset

EO uses four 1-D directional patterns: horizontal, vertical, 135° diagonal, and 45° diagonal, as shown in FIG. 3, for sample classification, where the label "p_{c}" represents a current sample and the labels "p₀" and "p₁" represent two neighboring samples. Four EO classes are specified based on the directions, and each EO class corresponds to one direction. The selected EO class is signaled in the bitstream as side information.

**TABLE 1**

| **Category** | **Condition** | **Meaning** |
|---|---|---|
| 1 | p_{c} < p₀ and p_{c} < p₁ | full valley |
| 2 | p_{c} < p₀ and p_{c} == p₁ or p_{c} == p₀ and p_{c} < p₁ | half valley |
| 3 | p_{c} > p₀ and p_{c} == p₁ or p_{c} == p₀ and p_{c} > p₁ | half peak |
| 4 | p_{c} > p₀ and p_{c} > p₁ | full peak |
| 0 | None of the above | plain |

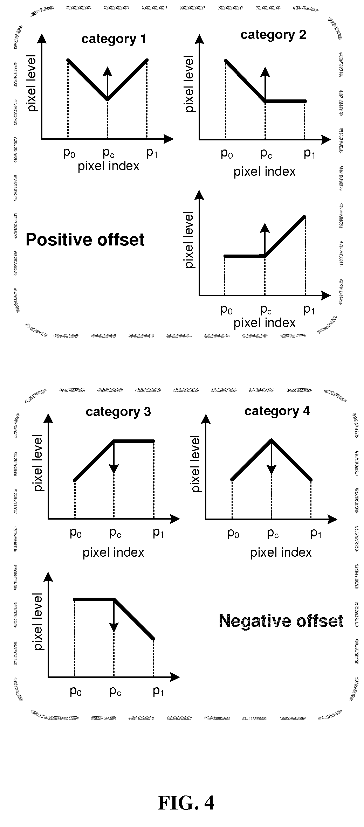

For a given EO class, each sample inside the CTB is classified into one of five (NC = 5) categories based on local gradients. Specifically, the current sample value, labeled as "p_{c}," is compared with its two neighbors along the selected 1-D direction. The categorization rules for a sample are summarized in TABLE 1. As also shown in FIG. 4, categories 1 and 4 are associated with a local valley and a local peak along the selected 1-D pattern, respectively, categories 2 and 3 are associated with concave and convex corners along the selected 1-D pattern, respectively. If the current sample value does not belong to categories 1- 4 (i.e., the current sample value is the same as its two neighbors, or if p₀ < p_{c} < p₁ or p₀ > p_{c} > p₁), then it is in category 0 and SAO is not applied (i.e., offset is 0). For categories 1- 4, offsets are encoded. For ease of notations, a category with an offset encoded may be referred to as a "signaled category."

### Band Offset

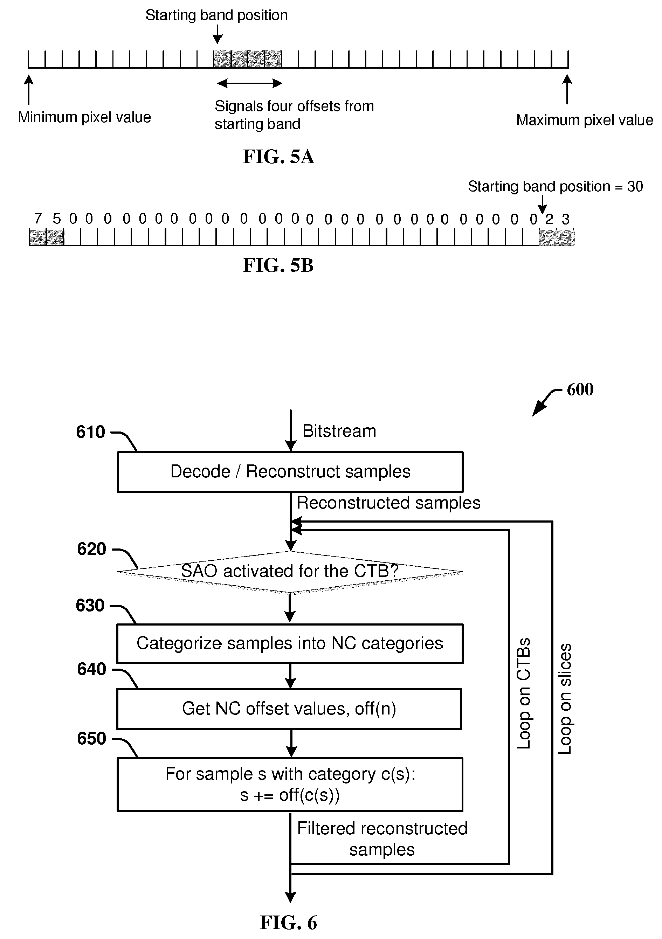

For BO, the range of sample values (for example, 0 - 255 in 8-bit) is uniformly split into 32 bands and the sample values belonging to (NC - 1) = 4 consecutive bands are modified by adding an offset, off(n), n = 1, ..., 4, as shown in FIG. 5A. Only offsets of four consecutive bands and the starting band position are signaled to the decoder. The starting band position indicates the position of the first band with an encoded offset. One offset is coded for each of the (NC - 1) bands and the remaining bands have an offset equal to zero. When the starting band position is close to the last band position, the offset values may correspond to non-consecutive bands as depicted in an example of FIG. 5B since the bands are managed as a circular buffer. Note for BO, those four signaled bands can be considered as four categories, and the remaining bands can be considered as another category. In the present application, we use the terms "band" and "category" interchangeably.

FIG. 6 illustrates an exemplary method 600 for decoding a bitstream using SAO. After the bitstream is decoded (610), the reconstructed samples are further filtered using SAO. It should be noted that the term "decoded" or "reconstructed" may mean that a bitstream is partially "decoded," for example, the signals obtained after deblocking filtering but before SAO filtering, and the reconstructed samples may be different from the final decoded output that is used for display.

If SAO is activated for a slice, the decoder checks (620) whether SAO is activated for the current CTB. If SAO is activated, the decoder categorizes (630) samples in the CTB into NC = 5 categories. The offset values for each category, off(n), can be obtained (640). At step 650, for sample s with category c(s), the sample can be adjusted to s = s + off(c(s)). As discussed above, sample offsets may be 0 and the corresponding samples are not adjusted. The filtered reconstructed samples are used as the final output of the decoder.

The encoder may perform a similar process as method 600. At the encoder side, step 610 is implemented to obtain the reconstructed samples, for example, the SAO filtering process uses the reconstructed samples from the deblocking filter as input. The offset values are encoded in the bitstream. The filtered reconstructed samples can be used as references for other pictures.

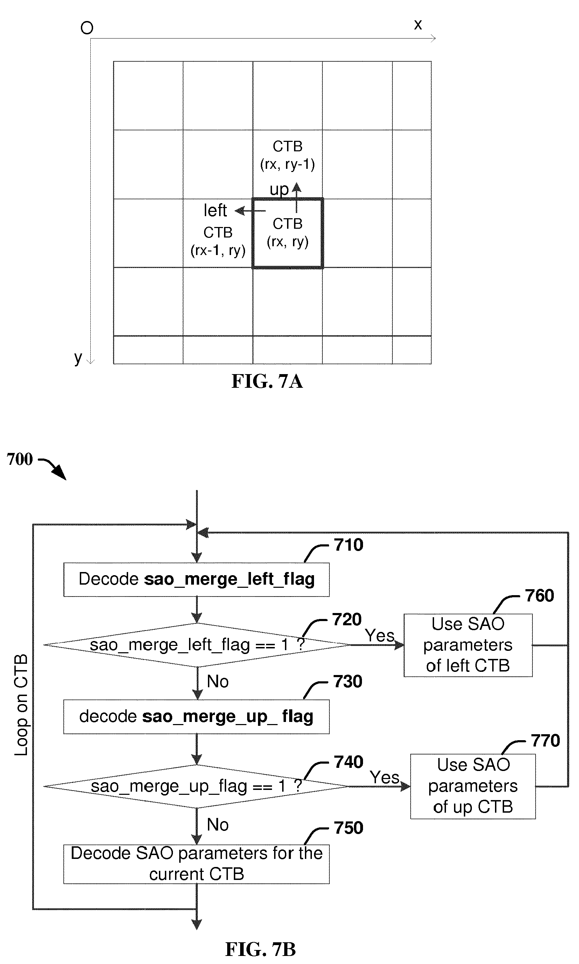

FIG. 7A illustrates a portion of a picture that includes a CTB at position (rx, ry), and a neighboring left CTB at position (rx - 1, ry) and a neighboring above CTB at position (rx, ry - 1). According to the HEVC standard, the SAO parameters are either encoded explicitly in the bitstream or derived from previous encoded neighboring left or above CTUs (merge modes). FIG. 7B illustrates an exemplary method 700 for obtaining the SAO parameters.

For a current CTB to be decoded, syntax element sao_merge_left_flag can be decoded (710) from the bitstream. If sao_merge_left_flag equals 1 (720), the SAO parameters of the neighboring left CTB are used for the current CTB (760), and the decoding moves on to the next CTB. If sao_merge_left_flag equals 0, syntax element sao_merge_up_flag can be decoded (730) from the bitstream. If sao_merge_up_flag equals 1 (740), the SAO parameters of the neighboring above CTB are used for the current CTB (770), and the decoding moves on to the next CTB. If neither of syntax elements sao_merge_left_flag or sao_merge_up_flag is equal to 1, the SAO parameters for the current CTB are decoded (750) from the bitstream.

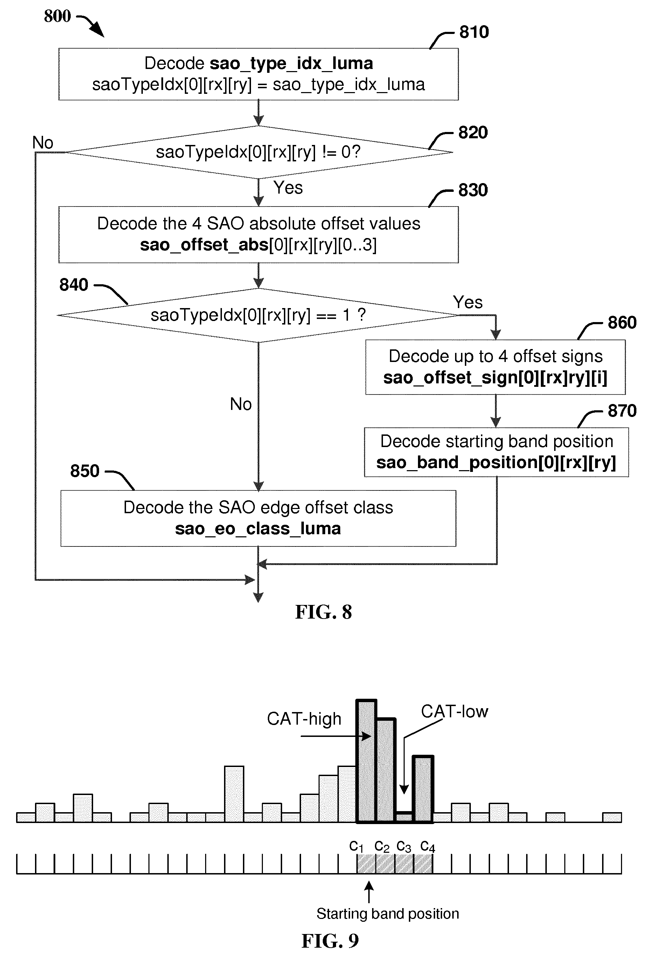

FIG. 8 illustrates an exemplary method 800 for decoding the SAO parameters for the luma component of the current CTB at position (rx, ry). The SAO parameters for the chroma components can be decoded similarly. Method 800 can be used to perform step 750 in method 700.

A syntax element, sao_type_idx_luma, which specifies the offset type for the luma component, can be decoded (810) from the bitstream and a variable saoTypeIdx[0][rx][ry] is set equal to sao_type_idx_luma. If saoTypeIdx[0][rx][ry] equals 0 (820), SAO is not applied. If saoTypeIdx[0][rx][ry] is not equal to 0, the decoder can decode (830) four SAO absolute offset values, sao_offset_abs[0][rx][ry][i], i = 0..3, from the bitstream.

If saoTypeIdx[0][rx][ry] equals 1 (840), BO is applied, and the decoder decodes (860, 870) up to four offset signs (sao_offset_sign[0][rx]ry][i]) for non-zero offset values and the starting band position (sao_band_position[0][rx][ry]). If saoTypeIdx[0][rx][ry] is not equal to 1 (840), EO is applied and the SAO EO class (sao_eo_class_luma) is decoded (850). For EO, based on the relationship between the current sample and two neighboring samples chosen based on the EO class, the category can be decided as shown in TABLE 1 and the sign for an offset can be inferred from the category as described before.

### Redefining Categories

The present principles are directed to SAO in video encoding and decoding. In one embodiment, the SAO categories can be redefined depending on the statistics of the reconstructed samples.

FIG. 9 illustrates a histogram for an exemplary CTB and the associated 32 SAO bands, wherein a bar in the histogram counts the number of samples in a band. The starting band position for signaling offsets is also indicated in FIG. 9.

In this example, offsets are encoded for 4 bands: c₁, c₂, c₃ and c₄. When an offset is encoded, there is an encoding cost associated with encoding the offset value. On the other hand, by encoding the offset value, the sample values in the corresponding category may be corrected and thus artifacts may be reduced. In general, the efficiency of SAO is a trade-off between the encoding cost of the offset value and the artifact reduction brought by correction of the sample values. When there are more samples in one category, more samples may be corrected, resulting in higher artifact reduction. Therefore, SAO may be more efficient when there are more samples in one category.

In the example of FIG. 9, band c₃ has a small number of samples. For ease of notation, within these four signaled bands, we refer to the band with the largest number of samples as CAT-high, and refer to the band with the smallest number of samples as CAT-low.

In one embodiment, we propose to redefine the signaled categories depending on the statistics of the reconstructed samples. The efficiency of SAO may be improved by adjusting the trade-off between the encoding cost and artifact reduction. Because redefining the categories may improve the precision of the offset as applied to a band, we also refer to the method of redefining categories as a "high precision" process.

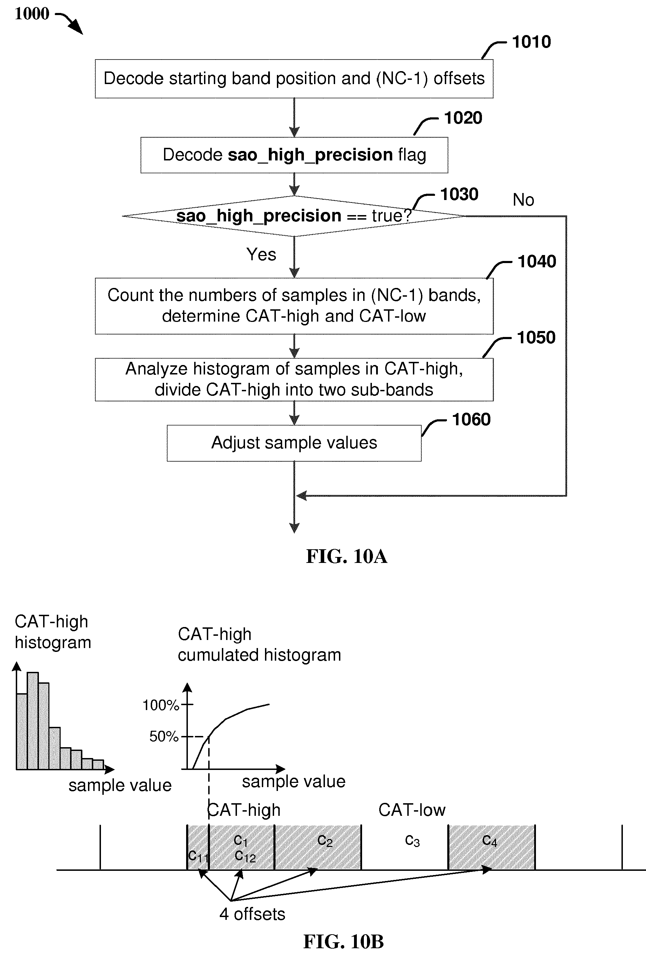

FIG. 10A illustrates an exemplary method 1000 for adjusting the BO categories at the decoder, according to an embodiment of the present principles. At step 1010, the decoder can decode the starting band position and (NC - 1) offsets. At step 1020, the decoder decodes the sao_high_precision flag, which informs the decoder whether the proposed high precision process is applied or not (1030). If the flag is true, for these (NC - 1) bands, the decoder counts (1040) the number of samples in a band, and determines the band with the highest number of samples as CAT-high and the band with the smallest number of samples as CAT-low.

The statistics of samples in band CAT-high are analyzed (1050) to divide the band into two sub-bands, CAT-high1 and CAT-high2. In one example, a histogram of the samples in the band CAT-high can be generated wherein a bin in the histogram corresponds to one sample value. Based on the histogram, band CAT-high can be divided into two sub-bands with substantially equal numbers of samples.

For example, using a cumulative histogram, CAT-high may be divided at a sample value whose cumulated histogram value is closest to 50%. After the division, band CAT-high becomes two sub-bands, band CAT-low is removed (i.e., offset is zero), and thus the total number of categories with non-zero offsets remains at (NC - 1). At step 1050, the sample values for the redefined categories are then adjusted by the received offsets.

In a variation, steps 1020 and 1030 may be skipped and the high precision process is always applied. In another variation, steps 1020 and 1030 are skipped, and the decoder decides whether or not to perform the high precision process based on the comparison based on CAT-low and CAT-high1 (or CAT-high2). For example, if the number of samples in CAT-high1 or CAT-high2 is smaller than the number of samples in CAT-low (i.e., min(n_{CAT-high1}, n_{CAT-high2}) < n_{CAT-low}), wherein n_{CAT-high1}, n_{CAT-high2} and n_{CAT-low} are the numbers of samples in CAT-high1, CAT-high2 and CAT-low, respectively, the high precision process is disabled, and otherwise the high precision process is enabled. In this example, the same process, namely, comparing n_{CAT-high1} and n_{CAT-high2} with n_{CAT-low} can be performed at both the encoder and decoder, and no explicit signaling is needed to indicate whether the high precision process is used or not.

FIG. 10B illustrates an example of redefining the categories for BO, according to an embodiment of the present principles. Here, c₁ is CAT-high and c₃ is CAT-low. CAT-high is divided into two sub-bands, c₁₁ and c₁₂. The received four offsets are applied to sub-bands (c₁₁ and c₁₂) and bands (c₂ and c₄), respectively. As can be seen from FIG. 10B, the left portion of the CAT-high histogram has larger values (i.e., denser sample values at the lower range of CAT-high). After the division of CAT-high, the sub-band (c₁₁) on the left is narrower than the sub-band (c₁₂) on the right. Thus when the samples are more densely distributed, the band becomes narrower. By associating an offset with a small range of sample values, the offset may be determined more accurately and the correction of samples may be more effective.

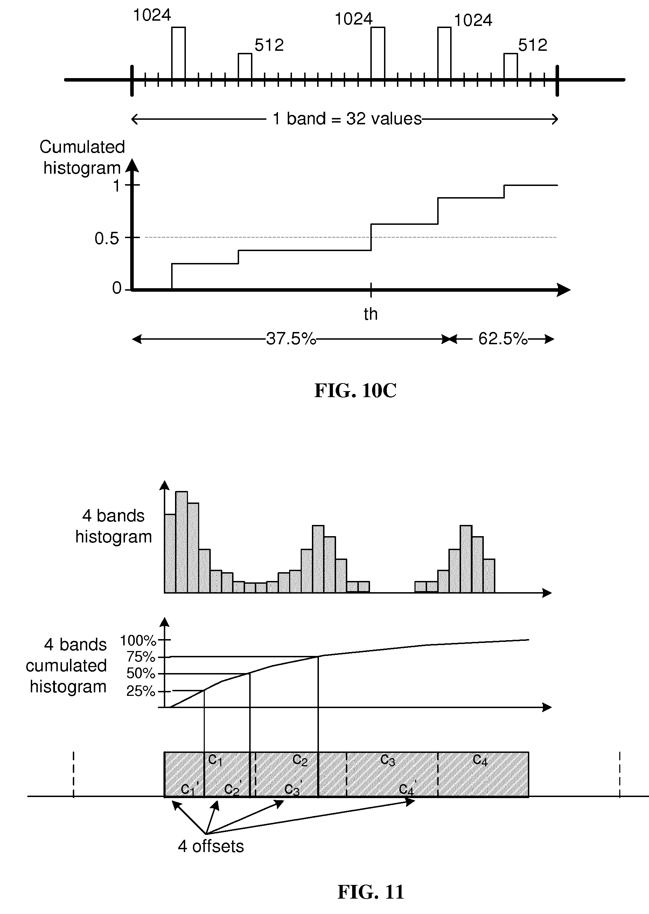

The cumulated histogram can be analyzed to determine the threshold where the division of CAT-high is made. In one implementation, the threshold is determined as the highest "th" value that satisfies cumul(th) ≤ 50%, wherein cumul(x) is the cumulated histogram value at x as shown in FIG. 10C. In this example, 37.5% of the samples fall into CAT-high1 and 62.5% of the samples fall into CAT-high2. Thus while the redefining method attempts to divide the band CAT-high into two sub-bands with equal numbers of samples, the numbers of samples in the two sub-bands may not always be exactly identical, due to the discrete nature of the numbers of samples.

We performed experiments on some sequences in different test conditions. For one sequence, the proportion of samples in CAT-high1 is 37.74%, 34.33%, 38,28%, and 41.92% for QP = 22, 27, 32, and 37, respectively, for the luma component, 39.78%, 41.71%, 42.73%, and 41.11% for QP = 22, 27, 32, and 37, respectively, for the Cb chroma component, and 39.62%, 41.51%, 42.38%, and 42.48% for QP = 22, 27, 32, and 37, respectively, for the Cr chroma component.

When the bin of a histogram is finer (for example, a bin represents a sample rather than two samples), the numbers of samples in two sub-bands may get closer (i.e., more equal).

In other embodiments, we may choose "th" as the lowest value that satisfies cumul(th) ≥ 50%. More generally, the choice of the division threshold can be considered as a value that meets certain conditions, for example, as the highest "th" value that satisfies cumul(th) ≤ cum_th%, the lowest value that satisfies cumul(th) ≥ cum_th%, wherein cumth may be equal to 50 as described above or be set as other values.

In FIG. 10A and FIG. 10B, redefining categories is described with respect to BO. For EO, while CAT-high and CAT-low can still be determined based on the number of the samples in each category, the statistics used for dividing category CAT-high may be gathered based on the gradients in individual categories. For example, the encoder or decoder may analyze the cumulated histogram of values C derived from the gradients, using one or more of the following:
- the average of the absolute values of the gradients: C = AVG(abs(p_{c}-p₀), abs(p_{c}-p₁))
- the difference of the absolute values of the gradients: C = abs(abs(p_{c}-p₀)-abs(p_{c}-p₁))
- the minimum of the absolute values of the gradients: C = MIN(abs(p_{c}-p₀), abs(p_{c}-p₁))
- the maximum of the absolute values of the gradients: C = MAX(abs(p_{c}-p₀), abs(p_{c}-p₁))
- for CAT_Half_Valley (EO category 2) and CAT_Half_Peak (EO category 3), use C = MAX(abs(p_{c}-p₀), abs(p_{c}-p₁)) as criterion; for other categories, use C = MIN(abs(p_{c}-p₀), abs(p_{c}-p₁)) as criterion.
- the sample value itself: C = p_{c}

When dividing CAT-high into two sub-categories, the histogram of category CAT-high can be based on value C, and a bin in the histogram represents the number of samples with a particular value C or a range of gradient-based values C. By dividing CAT-high based on gradients, more dominant gradients (i.e., with higher probabilities) may be contained in a smaller sub-category, and thus an offset can be designed more accurately for such a sub-category. For EO, the decoder decodes the offset values, infers the signs of the offsets, and applies the offsets to redefined categories.

On the encoder side, the categories should be redefined consistently with the decoder. Using method 1000 as an example, steps 1020-1050 are performed in the encoder to match the decoder. Step 1010 is not used, rather, the starting band position and (NC - 1) offsets are encoded. The value of the sao_high_precision_flag can be determined based on RDO (Rate-Distortion Optimization). As discussed above for the decoder side, the flag may be skipped, and the encoder may always perform the high precision process or the encoder may decide whether or not to perform the high precision process based on comparison between n_{CAT-high1}, n_{CAT-high2} and n_{CAT-low}.

In the above discussions, category CAT-high is divided into two sub-categories and category CAT-low is removed. In a variation, category CAT-low may be kept. In this case, the number of categories is increased and an additional offset is to be encoded.

JVET is the Joint Video Exploration Team on Future Video coding of ITU-T VCEG and ISO/IEC MPEG founded in October 2015. The reference software for the JVET group is named Joint Exploration Model (JEM). To test the proposed methods, we applied the encoding method corresponding to method 1000, and the variation (CAT-low not removed) in JEM 2.0, under typical test conditions. The method is applied to all three color components. There is around 0.30% bitrate reduction with a small increase in the encoding or decoding running time. Thus, the present embodiments may improve the compression efficiency with a very small computational complexity cost.

### Homogenizing Categories

In another embodiment, in order to improve the efficiency of BO, the bands may be chosen such that the number of samples are more evenly distributed in the four bands. As shown in the example of FIG. 11, using the histogram and cumulated histogram of samples, the original equal-length bands (c₁, c₂, c₃ and c₄) become variable-length bands (c₁', c₂', c₃' and c₄'). In this example, the histogram and the cumulated histogram are built using the numbers of samples in these four bands, and a bin of the histogram corresponds to one sample value. From the cumulated histogram, the sample values whose corresponding histogram values are closest to 25%, 50% and 75%, respectively, are used to divide the bands in order to homogenize the samples in these four categories. As discussed above for refining categories in BO, different techniques can be used to decide the four bands from the cumulated histogram. Also because of the discrete nature of the numbers of samples, the percentages after the homogenization may not be exactly 25%, 50% and 75%.

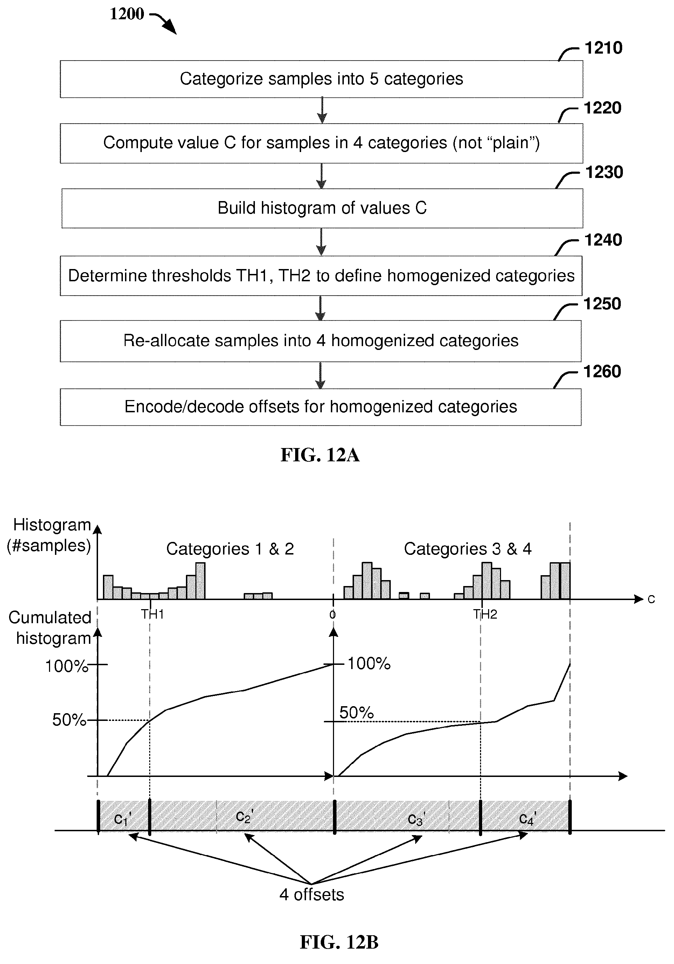

FIG. 12A illustrates an exemplary method 1200 for homogenizing categories for EO, according to an embodiment of the present principles. At step 1210, the encoder or decoder categorizes the reconstructed samples into 5 categories according to TABLE 1.

For samples that are not categorized as "plain", a value C can be computed (1220) as follows:
- if sample is category 1 or 2: C = - MIN(abs(p_{c}-p₀), abs(p_{c}- p₁))
- if sample is category 3 or 4: C = + MIN(abs(p_{c}- p₀), abs(p_{c}-p₁)) As discussed before, value C can also be calculated based on gradients using different methods. A cumulated histogram of the values "C" for categories 1 and 2 and a cumulated histogram of the values "C" for categories 3 and 4 can be built (1230), and used to determine two thresholds, TH1 and TH2, respectively. In particular, value C whose cumulated histogram value (for categories 1 and 2) is closest to 50% is used as TH1 (1240), and value C whose cumulated histogram value (for categories 3 and 4) is closest to 50% is used (1240) as TH2.

Note here we may consider the combined categories 1 and 2 as a "positive offset" category, and the combined categories 3 and 4 as a "negative offset" category. After homogenizing, the "positive offset" category is divided, based on the gradients, into two sub-categories, which would be associated with positive offsets. Similarly, the "negative offset" category is divided, based on the gradients, into another two sub-categories, which would be associated with negative offsets, as shown in an example in FIG. 12B. Therefore, the signs of the offsets do not need to be transmitted as for EO in HEVC.

Then the samples are re-allocated (1250) into these four homogenized (in term of the number of samples) categories. An offset is encoded/decoded (1260) for each of these (NC-1) categories, and the offset is used to adjust the sample values in the corresponding category.

For FIGs. 11 and 12, a range of categories (i.e., 4 signaled bands for BO and categories 1-4 for EO) are homogenized. The range can be determined or signaled as in HEVC, for example, for BO, the range can include (1 << (bitdepth - 3)) samples, and the lower limit is determined as the starting band position. Alternatively, different values known a-priori at the encoder or decoder can be used to set the range, for example, for EO, the range of the value C can be [1 - (1 << bitdepth), (1 << bitdepth) - 1]. In addition, the EO categories may be defined differently from what is in HEVC.

### Modified EO Categorization

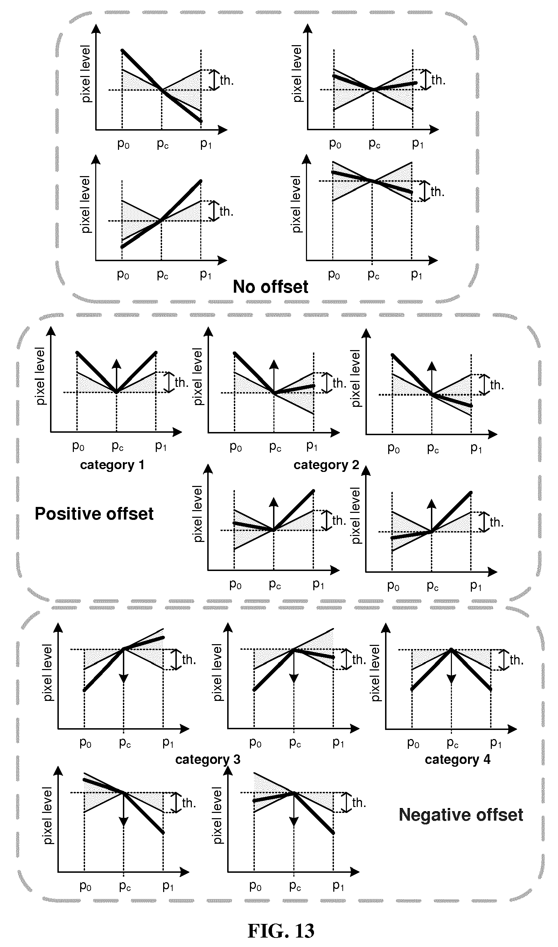

TABLE 2 shows a different categorization for EO for a given class, as also illustrated in FIG. 13. Note that a threshold "th" is introduced that allows to modify the EO categorization of TABLE 1. For example, when a difference of p₀ and p_{c} is larger than "th" and a difference of p₁ and p_{c} is larger than "th," "category 1" is assigned to sample p₀. When th = 0, the EO categorization as in TABLE 2 is the same as the one in TABLE 1. The samples categorized as "plain" have an offset inferred to be zero (see "no-offset" category in FIG. 13).

**TABLE 2**

| **Category** | **Condition** | **Meaning** |
|---|---|---|
| 1 | th < (p₀ - p_{c}) and th < (p₁ - p_{c}) | full valley |
| 2 | th < (p₀ - p_{c}) and abs(p₁ - p_{c}) ≤ th, or th < (p₁ - p_{c}) and abs(p₀ - p_{c}) ≤ th | half valley |
| 3 | th < (p_{c} - p₀) and abs(p₁ - p_{c}) ≤ th, or th < (p_{c} - p₁) and abs(p₀ - p_{c}) ≤ th | half peak |
| 4 | (p_{c} - p₀) > th and (p_{c} - p₁) > th | full peak |
| 0 | None of the above | plain |

For video content with a high bit depth, for example, 10-bit or 12-bit video, the probability of two neighboring samples having the same value for categories 2 and 3 as defined in HEVC tend to decrease because the noise in the pictures may increase. Thus, introducing a threshold may counter the impact of random noise in the high bit-depth video, and may increase the number of samples categorized into category 2 or 3. In addition, while computing the gradient-based value C, for example, for redefining or homogenizing the categories as discussed before, the introduction of threshold "th" allows for obtaining non-zero values for C for categories 2 and 3.

The choice of the threshold value "th" may depend on the content or known a priori to the encoder or decoder. For example, the value "th" may depend on the bit depth of the video data. As discussed before, the value "th" could be an a-priori known function of the bit-depth. For example, "th" is set to 0 if the bit depth is no greater than 8, and is set to 1 « (bitdepth - 9) if the bit depth is greater than 8 to cancel out the fluctuation caused by random noise.

Statistics on the common test set of video sequences used in JVET show that classes "EO_45" and "EO_135" contain less half peaks and half valleys than classes "EO_0" and "EO_90." Indeed, the distance between neighboring sample p₀ (or p₁) and the current sample p_{c} in "EO_45" and "EO_135" is larger than that in "EO_0" and "EO_90." Thus neighboring samples (p₀ and p₁) are less correlated with the current sample p_{c} in "EO_45" and "EO_135," and the probability to find exact matches is lower. Introducing a threshold, which depends on the class, can improve the classification and the choice of the best direction(s) for the current region. For example, setting a greater "th" for classes "EO_135" and "EO_45" than for other classes may homogenize the categories within directional classes and result in better statistics. Moreover, the value of "th" may also be encoded in the bitstream, for example, in the PPS (Picture Parameter Set) or in the slice header.

The modified EO categorization can be used to replace HEVC EO. Referring to FIG. 6, an offset may be encoded or decoded for each modified EO category, while the sign of the offset value is inferred. In method 600, the samples can be categorized using the modified categorization. In addition, the modified EO categorization can be used together with the redefining method or the homogenizing method as discussed above. For example, method 1000 or method 1200 can be adjusted to use the modified categorization for EO.

As discussed before, EO categorization can be consolidated. For example, there may be a first category for "positive offset," which includes categories 1 and 2 as shown in TABLE 2, a second category for "negative offset," which includes categories 3 and 4 as shown in TABLE 2, and a third category for "no offset." These categories may be used independently or in conjunction with the redefining or homogenizing methods.

We applied the encoding method as shown in FIG. 11 for BO, and the encoding method corresponding to method 1200 with modified categorization (th = 1) for EO, in JEM2.0, under typical test conditions. The method is applied to all three color components. We note there is around 0.40% bitrate reduction with a small increase in the encoding or decoding running time.

In another embodiment, the EO categorization keeps the "classical" categories as defined in HEVC, and adds one or more extra categories. For instance, half peaks and half valleys remain unchanged with an exact equality of the neighboring samples as shown in TABLE 1, but additional classes, namely "almost half peak" and "almost half valley" can be added, depending on the threshold "th," as shown in TABLE 3.

The EO categorization as shown in TABLE 3 includes 7 categories, where categories 1 and 6 correspond to categories 1 and 4, respectively, as shown in TABLE 1, categories 2 and 3 in combination corresponds to category 2 as shown in TABLE 2, and categories 4 and 5 in combination corresponds to category 2 as shown in TABLE 2. By including two additional categories and thus introducing the cost of sending two additional offsets, this categorization may enable the SAO process to derive more accurate offsets for the new categories. Also when the regions considered for SAO become larger with new coding schemes, the additional categories allow an encoder to find better rate-distortion compromise even with the additional syntax.

**TABLE 3**

| **Category** | **Condition** | **Meaning** |
|---|---|---|
| 1 | th < (p₀ - p_{c}) and th < (p₁ - p_{c}) | full valley |
| 2 | (th < (p₀ - p_{c}) and 0< (p₁- p_{c}) ≤ th), or (th < (p₁ - p_{c}) and 0< (p₀ - p_{c}) < th) | almost half valley |
| 3 | (p_{c} < p₀ and p_{c} == p₁) or (p_{c} == p₀ and p_{c} < p₁) | half valley |
| 4 | (p_{c} > p₀ and pₑ == p₁) or (p_{c} == p₀ and p_{c} > p₁) | half peak |
| 5 | (th < (p_{c} - p₀) and 0< (p₁ - p_{c}) ≤ th), or (th < (p_{c} - p₁) and 0 < (p₀ - p_{c}) < th) | almost half peak |
| 6 | (p_{c} - p₀) > th and (p_{c} - p₁) > th | full peak |
| 0 | None of the above | plain |

Various numeric values are used in the present application, for example, the threshold used for classification, the number of samples used in a bin in the histogram, the number of categories (i.e., NC = 5), or the cumulated histogram values used to redefine or homogenize the categories. It should be noted that the specific values are for exemplary purposes and the present principles are not limited to these specific values. For example, when the above discussions use 8-bit YUV videos as examples to show that there are 32 bands or to show there are four categories with signaled offsets, the present principles can also be applied to different video formats, in other bit depths or color space, or different numbers of bands or categories.

In the above, encoding SAO parameters is performed at a CTU level. The present principles can also be applied when the SAO encoding is performed at a different level, for example, but not limited to, at a slice level or at a picture level.

In the above, various embodiments are described with respect to the HEVC standard. For example, various methods to determine categories for SAO as described above can be used to modify the in-loop filtering module (165, 265) of the HEVC encoder and decoder as shown in FIG. 1 and FIG. 2. However, the present principles are not limited to HEVC, and can be applied to other standards, recommendations, and extensions thereof. The SAO filtering according to the present principles can also be applied as a general image processing method, for example, in image de-noising. Various embodiments described above can be used individually or in combination. For example, BO may choose to use dividing a band into two sub-bands, while EO may choose to use homogenizing the categories.

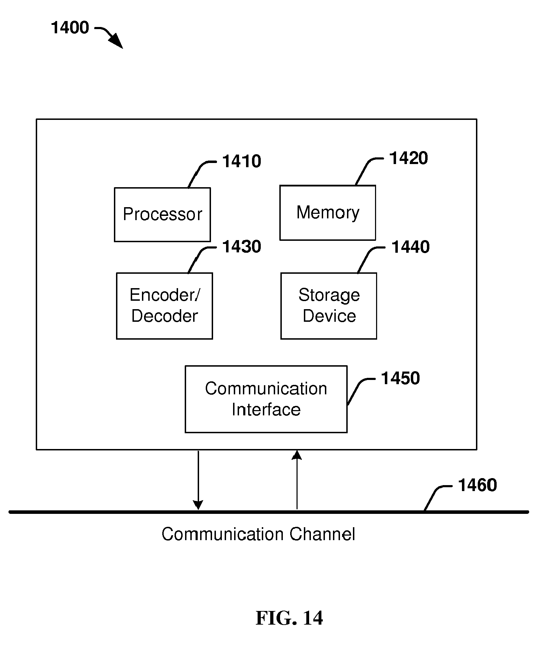

FIG. 14 illustrates a block diagram of an exemplary system in which various aspects of the exemplary embodiments of the present principles may be implemented. System 1400 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1400 may be communicatively coupled to other similar systems, and to a display via a communication channel as shown in FIG. 14 and as known by those skilled in the art to implement the exemplary video system described above.

The system 1400 may include at least one processor 1410 configured to execute instructions loaded therein for implementing the various processes as discussed above. Processor 1410 may include embedded memory, input output interface and various other circuitries as known in the art. The system 1400 may also include at least one memory 1420 (e.g., a volatile memory device, a non-volatile memory device). System 1400 may additionally include a storage device 1440, which may include non-volatile memory, including, but not limited to, EEPROM, ROM, PROM, RAM, DRAM, SRAM, flash, magnetic disk drive, and/or optical disk drive. The storage device 1440 may comprise an internal storage device, an attached storage device and/or a network accessible storage device, as non-limiting examples. System 1400 may also include an encoder/decoder module 1430 configured to process data to provide an encoded video or decoded video.

Encoder/decoder module 1430 represents the module(s) that may be included in a device to perform the encoding and/or decoding functions. Encoder 100 and decoder 200 may be used in encoder/decoder module 1430. As is known, a device may include one or both of the encoding and decoding modules. Additionally, encoder/decoder module 1430 may be implemented as a separate element of system 1400 or may be incorporated within processors 1410 as a combination of hardware and software as known to those skilled in the art.

Program code to be loaded onto processors 1410 to perform the various processes described hereinabove may be stored in storage device 1440 and subsequently loaded onto memory 1420 for execution by processors 1410. In accordance with the exemplary embodiments of the present principles, one or more of the processor(s) 1410, memory 1420, storage device 1440 and encoder/decoder module 1430 may store one or more of the various items during the performance of the processes discussed herein above, including, but not limited to the input video, the bitstream, equations, formula, matrices, variables, operations, and operational logic.

The system 1400 may also include communication interface 1450 that enables communication with other devices via communication channel 1460. The communication interface 1450 may include, but is not limited to a transceiver configured to transmit and receive data from communication channel 1460. The communication interface may include, but is not limited to, a modem or network card and the communication channel may be implemented within a wired and/or wireless medium. The various components of system 1400 may be connected or communicatively coupled together using various suitable connections, including, but not limited to internal buses, wires, and printed circuit boards.

The exemplary embodiments according to the present principles may be carried out by computer software implemented by the processor 1410 or by hardware, or by a combination of hardware and software. As a non-limiting example, the exemplary embodiments according to the present principles may be implemented by one or more integrated circuits. The memory 1420 may be of any type appropriate to the technical environment and may be implemented using any appropriate data storage technology, such as optical memory devices, magnetic memory devices, semiconductor-based memory devices, fixed memory and removable memory, as non-limiting examples. The processor 1410 may be of any type appropriate to the technical environment, and may encompass one or more of microprocessors, general purpose computers, special purpose computers and processors based on a multi-core architecture, as non-limiting examples.

Various methods are described above, and each of the methods comprises one or more steps or actions for achieving the described method. Unless a specific order of steps or actions is required for proper operation of the method, the order and/or use of specific steps and/or actions may be modified or combined.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for processing video data, comprising:
accessing (610) a sample in a picture and two neighboring samples of the sample, the two neighboring samples including a first neighboring sample and a second neighboring sample;
determining (630) a category for the sample, based on at least one of a relation between the sample and the first neighboring sample, and a second relation between the sample and the second neighboring sample, and wherein the determining is further based on a value; and
adjusting (650) values of samples in the category based on an offset.

2. The method of claim 1, wherein the determining is based on (1) a difference of a value of the first neighboring sample and a value of the sample exceeding a first value, and (2) a difference of a value of the second neighboring sample and the sample value exceeding a second value.

3. The method of claim 1, wherein the determining is based on (1) a difference of a value of the first neighboring sample and a value of the sample exceeding a first value, and (2) an absolute value of the difference of the sample value and a value of the second neighboring sample being smaller than a second value.

4. The method of claim 1, wherein the determining is based on (1) a difference of a value of the first neighboring sample and a value of the sample exceeding a first value, and (2) a difference of the sample value and a value of the second neighboring sample exceeding a second value.

5. The method of claim 1, wherein the determining is based on (1) a difference of a value of the sample and a value of the first neighboring sample exceeding a first value, and (2) an absolute value of the difference of the sample value and a value of the second neighboring sample being smaller than a second value.

6. The method of claim 1, wherein the determining is based on (1) a difference of a value of the sample and a value of the first neighboring sample exceeding a first value, and (2) a difference of the sample value and a value of the second neighboring sample exceeding a second value.

7. The method of claim 1, wherein the determining is based on (1) a difference of a value of the sample and a value of the first neighboring sample exceeding a first value, and (2) a difference of a value of the second neighboring sample and the sample value being smaller than a second value.

8. The method of claim 2, 3 or 4, wherein values of samples in the category are configured to be adjusted by a positive offset, without explicit signaling of a sign.

9. The method of claim 5, 6 or 7, wherein values of samples in the category are configured to be adjusted by a negative offset, without explicit signaling of a sign.

10. The method of any one of claims 2-9, wherein the first value or the second value is based on a bit depth of the picture.

11. The method of claim 10, wherein the first value or the second value is based on 1 << (bitdepth - 9), wherein bitdepth is the bit depth of the picture.

12. The method of any one of claims 2-11, wherein the sample is included in a block of the picture, further comprising:
determining a class for the block, wherein the two neighboring samples are determined based on the class, and wherein at least one of the first value and the second value is based on the class.

13. The method of any one of claims 1-12, further comprising one of:
encoding the offset into a bitstream; and
decoding the offset from the bitstream.

14. A video signal formatted to include:
a sample in a picture and two neighboring samples of the sample, the two neighboring samples including a first neighboring sample and a second neighboring sample, wherein a category for the sample is determined, based on at least one of a relation between the sample and the first neighboring sample and a second relation between the sample and the second neighboring sample, and wherein the category is further based on a value; and
an offset used to adjust values of samples in the category.

15. An apparatus (1400) for processing video data, comprising at least one memory and one or more processors configured to perform the method according to any one of claims 1-13.
